# EUROPÄISCHE PATENTSCHRIFT

(11) **EP 3 377 864 B1**
(45) Veröffentlichungstag und Bekanntmachung des Hinweises auf die Patenterteilung: **16.09.2020**
(21) Anmeldenummer: 15795174.0
(22) Anmeldetag: 17.11.2015
(51) Int. Cl.: G01F 23/284, H01Q 1/22, G01S 13/88, G01S 13/89, G01S 13/42, G01S 7/40, H01Q 21/06, H01Q 21/08, H01Q 3/08, H01Q 19/06

(54) **ANTENNENVORRICHTUNG UND VERFAHREN ZUM BETREIBEN EINER ANTENNENVORRICHTUNG**
ANTENNA DEVICE AND METHOD FOR OPERATING AN ANTENNA DEVICE
DISPOSITIF D'ANTENNE ET PROCÉDÉ POUR FAIRE FONCTIONNER UN DISPOSITIF D'ANTENNE

(43) Veröffentlichungstag der Anmeldung: 26.09.2018
(73) Patentinhaber: VEGA Grieshaber KG, 77709 Wolfach (DE)
(72) Erfinder: WELLE, Roland, 77756 Hausach (DE)
(74) Vertreter: Maiwald Patent- und Rechtsanwaltsgesellschaft mbH
(86) Internationale Anmeldenummer: PCT/EP2015/076859
(87) Internationale Veröffentlichungsnummer: WO 2017/084701

(56) Entgegenhaltungen:
- EP-A1- 2 128 576
- EP-A1- 2 803 952
- WO-A1-2015/120880
- DE-U1- 20 122 754
- DE-U1- 20 122 754

## Beschreibung

### Gebiet der Erfindung

Die Erfindung betrifft das Gebiet der Messtechnik. Insbesondere betrifft die Erfindung die Messung von Füllständen mit elektromagnetischen Wellen.

### Hintergrund der Erfindung

Zur Bestimmung des Füllstands eines Füllguts oder Schüttguts in einem Behälter können topologieerfassende Füllstandmessgeräte verwendet werden. Diese Messgeräte tasten die Füllgut- und/oder Schüttgutoberfläche mit einem elektronischen Signal ab und können die aus der Abtastung abgeleitete Kenntnis der dreidimensionalen Oberflächentopologie des Füllguts und/oder des Schüttguts weiter ausnutzen, um unter Annahme einer bekannten Fläche unterhalb des Füllguts das Volumen des Füllguts und/oder bei bekannter Dichte die Masse oder weitere daraus abzuleitende Größen zu ermitteln. Zur Abtastung wird ein Strahl einer elektromagnetischen Welle über das Füllgut oder das Schüttgut geführt und das Reflexionsverhalten unter unterschiedlichen Winkeln betrachtet und ausgewertet.

Die Patentschrift DE 10 2007 039 397 B3 beschreibt ein Verfahren zum Betrieb einer Antennengruppe mit mehreren Sendern und mehreren Empfängern sowie eine zugehörige Vorrichtung. Die Druckschrift WO 2015/052699 A1 betrifft ein Verfahren zum Auswerten eines Inhalts eines Behälters mithilfe einer Vielzahl von akustischen Sende-/Empfangs-Arrays. Die Druckschrift WO 2015/120885 A1 betrifft eine Messvorrichtung und ein Verfahren zum Erfassen von Eigenschaften eines Objektes.

Dokument WO 2015/120880 A1 beschreibt eine Antennenvorrichtung für ein Füllstandmessgerät mit einer drehbar gelagerten Antenneneinheit, welche ein Array aus Strahlerelementen aufweist.

Dokument DE 201 22 754 U1 beschreibt eine Füllstandmessvorrichtung mit einem beweglichen Messkopf, wobei eine Steuereinheit eine Qualität des in einer gegebenen Position empfangenen Echosignals beurteilt und einen Aktor zum Bewegen des Messkopfs ansteuert, wenn die Qualität als mangelhaft beurteilt wird.

### Zusammenfassung der Erfindung

Gemäß einem Aspekt der vorliegenden Erfindung mag eine Antennenvorrichtung, ein Füllstandmessgerät und ein Verfahren zum Betreiben einer Antennenvorrichtung beschrieben werden.

Es mag erwünscht sein, ein effektives Messen von Füllständen zu ermöglichen.

Der Gegenstand der Erfindung wird von den unabhängigen Patentansprüchen festgelegt. Weitere Ausführungsbeispiele der Erfindung ergeben sich aus den Unteransprüchen und der folgenden Beschreibung.

Gemäß einem Aspekt der Erfindung wird eine Antennenvorrichtung beschrieben, die eine Steuereinrichtung, eine Auswerteeinrichtung, zumindest eine erste Sendeeinrichtung und zumindest eine erste Empfangseinrichtung aufweist. Die Steuereinrichtung ist zum Aussenden eines Sendesignals mit der zumindest einen ersten Sendeeinrichtung eingerichtet und die Auswerteeinrichtung zum Empfangen von zumindest einem Empfangssignalen über die zumindest eine erste Empfangseinrichtung eingerichtet. Außerdem ist die Steuereinrichtung dazu eingerichtet, die zumindest eine erste Sendeeinrichtung so zu betreiben, dass mittels der Auswerteeinrichtung aus dem empfangenen zumindest einen Empfangssignal ein Verlauf einer Oberfläche eines Objekts bestimmbar ist. In einem Beispiel können die Steuereinrichtung und die Auswerteeinrichtung miteinander in Verbindung stehen, um sich gegenseitig zu steuern. In einem anderen Beispiel können die Steuereinrichtung und die Auswerteeinrichtung unabhängig voneinander betrieben werden. Die Auswerteeinrichtung ist weiter dazu eingerichtet, einen Fehler beim Erfassen des Verlaufs der Oberfläche des Objekts zu erkennen und beim Erkennen des Fehlers, die Steuereinrichtung und/oder die Sendeeinrichtung derart anzusteuern, dass die Auswerteeinrichtung statt den Verlauf der Oberfläche des Objekts einen Abstand der Oberfläche des Objekts von der Sendeeinrichtung und/oder von der Empfangseinrichtung bestimmt. Der Abstand mag in einer vorgebbaren einzigen Raumrichtung gemessen werden, beispielsweise in einer Richtung im Wesentlichen senkrecht zur Objektoberfläche und/oder in einer Richtung, in der die Antennenvorrichtung bei einem Defekt stecken geblieben ist. Alternativ oder zusätzlich zu dem Messen des Abstandes im Fehlerfall kann auch eine Fehlermeldung ausgegeben werden, die auf die schlechte Qualität einer Messung hinweist oder einen Defekt anzeigt. Die Ausgabe der Fehlermeldung kann an einem Display oder akustisch über einen Piepser erfolgen.

In anderen Worten mag eine Topologiemessvorrichtung, die für die Erfassung der Oberfläche eines Objektes oder des Verlaufs einer Oberfläche eingerichtet ist, beim Auftreten eines Fehlers in eine Messvorrichtung zu einer reinen Abstandsmessung in im Wesentlichen nur einer einzigen Raumrichtung umgeschaltet werden. Ein Fehler kann ein mechanischer Defekt sein aber auch eine Abnahme einer Güte einer Messung. Beispielsweise kann ein Messverfahren, das in einem ersten Betriebsmodus vorsieht einen Füllstand über die Bestimmung eines Verlaufs einer Oberfläche zu ermitteln, in einem zweiten Betriebsmodus umschalten, in dem der Füllstand über eine Abstandsmessung an einer vorgebbaren Position ermittelt wird. Das mag bedeuten, dass das Bestimmen eines Verlaufs einer Oberfläche aus einer Vielzahl von Abstandmessungen in das Bestimmen eines Abstandes aus einer einzigen Abstandsmessung umgeschaltet wird. Der Füllstand mag somit beim Auftreten eines Fehlers nach dem Umschalten von einer Topologiemessung in eine Abstandsmessung durch eine Abstandsmessung ermittelt werden, wobei die Anzahl der Messungen pro Füllstandmesswert reduziert werden mag. Es mag somit auch möglich sein, von dem Empfang von zumindest zwei Empfangssignalen auf den Empfang von einem einzigen Empfangssignal zur Berechnung des Füllstandes umzuschalten.

Gemäß einem anderen Aspekt der Erfindung wird eine Antennenvorrichtung angegeben, welche eine Steuereinrichtung, eine Auswerteeinrichtung, zumindest eine erste Sendeeinrichtung und zumindest eine erste Empfangseinrichtung aufweist. Die Steuereinrichtung ist zum Aussenden eines Sendesignals, beispielsweise einer elektromagnetischen Welle, mit der zumindest einen Sendeeinrichtung eingerichtet. Die Auswerteeinrichtung ist zum Empfangen von zumindest zwei Empfangssignalen über die zumindest eine erste Empfangseinrichtung eingerichtet. Die zumindest eine erste Empfangseinrichtung und/oder die Vielzahl von Empfangseinrichtungen kann/können das Empfangssignal entweder im Wesentlichen gleichzeitig empfangen und/oder zeitversetzt empfangen.

Die Auswerteeinrichtung ist eingerichtet, aus den zumindest zwei Empfangssignalen zumindest zwei Echokurven für zumindest zwei vorgebbare Raumrichtungen zu bestimmen, um eine Oberfläche eines Objekts zu erfassen. Zum Erfassen einer Oberfläche eines Objekts mag ein Messergebnis für einen Oberflächenverlauf eines Objekts bestimmt werden, beispielsweise indem eine Vielzahl von Abständen zu verschiedenen Punkten der Oberfläche bestimmt wird und daraus ein Messwert ermittelt wird. Die Auswerteeinrichtung ist weiter eingerichtet, aus den Messergebnissen der Empfangssignale für zumindest zwei verschiedene Raumwinkel ein Qualitätsmaß für die zumindest zwei Empfangssignale zu bestimmen. Das Qualitätsmaß kann beispielsweise eine Stärke des Empfangssignals sein oder ein Signal-Rausch-Abstand des Empfangssignals. Die Auswerteeinrichtung ist außerdem dazu eingerichtet, bei Abweichen des Qualitätsmaßes von einer vorgebbaren Schwelle für das Qualitätsmaß, also bei Unterschreiten oder Überschreiten einer Schwelle für das Qualitätsmaß, für die zumindest zwei Empfangssignale, die Sendeeinrichtung anzuweisen, eine Energie des Sendesignals zu erhöhen und eine einzige Echokurve für eine einzige vorgebbare Raumrichtung zu bestimmen.

In anderen Worten mag die Qualität einer Topologiemessung oder die Qualität einer Messung eines Verlaufs einer Oberfläche eines Objekts bestimmt werden. Wenn die Qualität der Messung nicht mehr einem vorgebbaren Wert entspricht, mag von einer Topologiemessung zu einer reinen Füllstandmessung umgeschaltet werden. Während bei einer Topologiemessung Echokurven betrachtet werden, die für verschiedene Raumrichtungen aufgenommen und/oder im Sensor, in der Antennenvorrichtung und/oder im Füllstandmessgerät und insbesondere in der Auswerteeinrichtung berechnet werden, wird bei einer reinen Füllstandmessung nur eine Echokurve aus einer einzigen Raumrichtung aufgenommen und/oder berechnet, um zu einem Messwert zu kommen, beispielsweise zu einem Füllstand. Die einzige Raumrichtung mag im Wesentlichen senkrecht zu der Füllstandoberfläche verlaufen. Die einzige Raumrichtung kann aber auch so gewählt werden, dass die Energie eines Signals, das in dieser Richtung empfangen wird, maximal ist, verglichen mit anderen Empfangsrichtungen. Zur Bestimmung des Empfangssignals in einer Raumrichtung mag ein in zwei Raumrichtungen fokussiertes Sendesignal und auch ein entsprechend fokussiertes Empfangssignal genutzt werden. Es mögen also Signale mit einer geringen Streuung eingesetzt werden. Linsen oder eine Hornantenne können für eine entsprechende Fokussierung sorgen. Auch eine analoge Strahlformung durch gezielte Überlagerung einer Vielzahl analoger, in der Phasenlage entsprechend eingestellter Sendesignale kann für eine entsprechende Fokussierung sorgen.

Gemäße einem anderen Aspekt der vorliegenden Erfindung wird ein Verfahren zum Betreiben einer Antennenvorrichtung angegeben, welches das Aussenden eines Sendesignals mit zumindest einer ersten Sendeeinrichtung und das Empfangen von zumindest zwei Empfangssignalen über zumindest eine erste Empfangseinrichtung aufweist. Das Verfahren sieht weiter vor, einen Verlauf einer Oberfläche eines Objekts aus den empfangenen zumindest zwei Empfangssignalen zu bestimmen und einen Fehler zu erkennen, der beim Bestimmen des Verlaufs der Oberfläche des Objekts auftritt. Als Reaktion auf das Erkennen des Auftretens des Fehlers sieht das Verfahren vor, die Steuereinrichtung derart anzusteuern, dass die Auswerteeinrichtung statt den Verlauf der Oberfläche des Objekts einen Abstand der Oberfläche des Objekts von der Sendeeinrichtung und/oder von der Empfangseinrichtung bestimmt.

In einem Beispiel wird ein Verfahren zum Betreiben einer Antennenvorrichtung bereitgestellt, welches das Aussenden eines Sendesignals mit der zumindest einen Sendeeinrichtung und das Empfangen von zumindest zwei Empfangssignalen über zumindest eine Empfangseinrichtung aufweist. Das Verfahren kann auch vorsehen, aus den zumindest zwei Empfangssignalen zumindest zwei Echokurven für zumindest zwei vorgebbare Raumrichtungen zu bestimmen, um eine Oberfläche eines Objekts zu erfassen. Darüber hinaus bestimmt das Verfahren ein Qualitätsmaß für die zumindest zwei Empfangssignale und erhöht eine Energie des Sendesignals und/oder des Empfangssignals. Und wenn das Qualitätsmaß von einer vorgebbare Schwelle für das Qualitätsmaß für die zumindest zwei Empfangssignale abweicht, bestimmt das Verfahren eine einzige Echokurve für eine einzige vorgebbare Raumrichtung.

In einem weiteren Beispiel, mag bei einer mechanischen Abtastung durch ein physikalisches Verstellen einer Verstelleinrichtung mit einer einzigen Sendeeinrichtung und einer einzigen Empfangseinrichtung zeitlich in Folge ein Sendesignal und ein zugehöriges Empfangssignal, das durch Reflexion an der Objektoberfläche aus dem Sendesignal hervorgeht, für verschiedene Raumrichtungen ausgesendet und/oder empfangen werden. Alternativ oder in Ergänzung kann ein Antennenarray genutzt werden, das eine Vielzahl von Sendeeinrichtungen und/oder eine Vielzahl von Empfangseinrichtungen nutzt, um mittels digitaler Strahlfomung (DBF, Digital Beam Forming) eine Abtastung der Objektoberfläche zu ermöglichen. Bei Verfahren der digitalen Strahformung erfolgt eine Abtastung durch mathematische Methoden.

Gemäß einem anderen Aspekt der vorliegenden Erfindung wird ein Füllstandmessgerät mit einer erfindungsgemäßen Antennenvorrichtung geschaffen. Das Füllstandmessgerät kann einen Prozessor aufweisen. Ferner mag ein computerlesbares Speichermedium mit einem Programmcode und ein Programmelement angegeben werden, der/das wenn er/es von einem Prozessor ausgeführt wird, das Verfahren zum Betreiben einer Antennenvorrichtung ausführt.

Gemäß einem anderen Aspekt der vorliegenden Erfindung weist die Antennenvorrichtung zumindest eine zweite Empfangseinrichtung auf. Die Auswerteeinrichtung ist ferner dazu eingerichtet, über die zumindest eine erste Empfangseinrichtung und über die zumindest eine zweite Empfangseinrichtung je eines der zumindest zwei Empfangssignale zu empfangen; und, wenn das Qualitätsmaß von der vorgebbaren Schwelle für das Qualitätsmaß abweicht, kann die Auswerteeinrichtung ein zusätzliches weiteres Sendesignal aussenden. In einem Beispiel kann das Aussenden über eine der zumindest einen ersten Empfangseinrichtung und der zumindest einen zweiten Empfangseinrichtung erfolgen. Beispielsweise kann auch die Auswerteeinrichtung die Steuereinrichtung dazu anweisen, ein solches zusätzliches Signal auszusenden. Für die Nutzung der Empfangseinrichtung zum Aussenden eines Signals kann die Empfangseinrichtung als eine Sende-/Empfangseinrichtung ausgebildet sein. Die Auswerteeinrichtung kann die Sendeeinrichtung nutzen, um das Aussenden des zusätzlichen Signals anzuregen. Durch das Aussenden des zusätzlichen Sendesignals können sich die beiden Signale so überlagern, dass sich die Energie des Sendesignals erhöht. Die Auswerteeinrichtung sieht dann jedoch vor, im Wesentlichen nur eine einzige Echokurve für die einzige vorgebbare Raumrichtung zu bestimmen.

Eine Beeinträchtigung der Signalqualität mag von Verschmutzungen innerhalb eines Behälters verursacht werden. Das Erhöhen der Energie kann es trotz solcher Verschmutzungen erlauben, Füllstände zu ermitteln, und nur eine eingeschränkte Bestimmung des Oberflächenverlaufes eines Objekts zuzulassen. In einem anderen Beispiel kann die energiereiche Messung für eine Plausibilitätsmessung genutzt werden, um eine andere Messung zu verifizieren, wie beispielsweise eine Topologiemmessung.

Gemäß weiterer Aspekte der vorliegenden Erfindung kann zumindest eine zweite oder eine Vielzahl von Sendeeinrichtungen zum Einsatz kommen, die einen Zeitmultiplexbetrieb, einen Frequenzmultiplexbetrieb und/oder einen Codemultiplexbetrieb ermöglichen und in solch einem Betrieb betrieben werden. Die Steuereinrichtung mag die Sendeeinrichtungen gemäß einem dem Zeitmultiplexschema entsprechendem Zeitschema aktivieren oder sie mag das Sendesignal mit einem entsprechenden Frequenzsignal oder einem Code modulieren. Ferner kann zusätzlich oder alternativ eine mechanische Verstelleinrichtung vorgesehen sein, die es ermöglicht den Raumwinkel mechanisch einzustellen, um Echokurven aus verschiedenen Raumrichtungen zu ermitteln. Außerdem kann nicht nur durch das zusätzliche Versenden eines Sendesignals über eine weitere Sendeeinrichtung, über eine Empfangseinrichtung und/oder über eine Sende-/Empfangseinrichtung die Signalenergie erhöht werden. Es kann auch eine Energieeinstelleinrichtung vorgesehen sein, die es erlaubt die Sendeenergie zu erhöhen, wenn eine Füllstandmessung in nur einer einzigen Raumrichtung durchgeführt wird. Die Anordnung von Sendeelementen, Empfangselementen und/oder Sende-/Empfangselementen in Abständen untereinander, die kleiner oder gleich der halben Wellenlänge sind, mag gute Ergebnisse bei einer Signalberechnung ergeben. Mittels eines Zeitmultiplexbetriebs, kann aber auch eine künstliche Verringerung der Abstände zwischen den Elementen emuliert werden, indem virtuelle Arrays aus den tatsächlichen Arrays gebildet werden. Ein virtuelles Arrays wird gebildet, indem die Positionen der Sendeinrichtungen und Empfangseinrichtungen, die im Zeitmultiplexverfahren betrieben werden, mathematisch mit dem Zeitschema verrechnet werden, so dass der zeitlich sequentielle Betrieb wie der Betrieb einer virtuellen Antenne in einem Zeitpunkt erscheint. Die Ausbildung einer Antennenvorrichtung, eines Füllstandmessgeräts, einer Sendeeinrichtung und/oder einer Auswerteeinrichtung als ein Zweileitergerät, mag es erlauben einem Verbraucher Energie über eine Zweidrahtleitung zuzuführen und über dieselbe Leitung Daten zu übertragen.

Gemäß einem anderen Aspekt der vorliegenden Erfindung weist die Antennenvorrichtung eine Verstelleinrichtung zum mechanischen Einstellen der zumindest einen ersten Sendeeinrichtung und/oder der zumindest einen ersten Empfangseinrichtung auf, um den Verlauf der Oberfläche des Objekts durch ein mechanisches Verstellen der zumindest einen ersten Sendeeinrichtung und/oder der zumindest einen ersten Empfangseinrichtung zu bestimmen. Die Steuereinrichtung mag in einem Beispiel mit einer Winkelerfassungseinrichtung oder einer Winkelerfassungseinheit verbunden sein, die die Lage der mechanisch verstellten Antennenvorrichtung bestimmen kann. Die Steuereinrichtung mag auch so eingerichtet sein, dass sie die gewonnenen Empfangssignale und insbesondere die daraus abgeleiteten Echokurven mit der Lage verknüpft, um eine Topologie zu bestimmen. Die Auswerteeinrichtung ist ferner eingerichtet, beim Erkennen des Fehlers, die Verstelleinrichtung fest in einer vorgebbaren Position zu fixieren und/oder falls der Fehler derart gestaltet ist, dass sich die Verstelleinrichtung nicht mehr bewegt, z.B. wenn ein Motor ausfällt, die Position oder Lage der Antennenvorrichtung zu bestimmen. Ferner ist die Auswerteeinrichtung eingerichtet in dem Fehlerfall eine Fehlermeldung auszugeben und/oder den Abstand der Oberfläche des Objekts von der Sendeeinrichtung und/oder von der Empfangseinrichtung in dieser fest eingestellten Position zu bestimmen. Die ermittelte Lage der Antennenvorrichtung mag genutzt werden, um mögliche Abweichungen von der senkrechten Lage zu der Objektoberfläche zu kompensieren, wenn der Abstand der Objektoberfläche zu der Sendeeinrichtung und/oder zu der Empfangseinrichtung bestimmt wird.

### Kurze Beschreibung der Figuren

Im Folgenden werden weitere exemplarische Ausführungsbeispiele der vorliegenden Erfindung mit Verweis auf die Figuren beschrieben.
Fig. 1 zeigt ein Füllstandmessgerät gemäß einem exemplarischen Ausführungsbeispiel der vorliegenden Erfindung.
Fig. 2 zeigt eine perspektivische Darstellung einer linearen Parabolantennenvorrichtung gemäß einem exemplarischen Ausführungsbeispiel der vorliegenden Erfindung.
Fig. 3 zeigt eine perspektivische Darstellung eines zweidimensionalen Antennenarrays gemäß einem exemplarischen Ausführungsbeispiel der vorliegenden Erfindung.
Fig. 4 zeigt eine Draufsicht auf eine Antennenvorrichtung mit linear angeordneten Elementen gemäß einem exemplarischen Ausführungsbeispiels der vorliegenden Erfindung.
Fig. 5 zeigt ein Flussdiagramm für ein Verfahren zum Betreiben einer Antennenvorrichtung gemäß einem exemplarischen Ausführungsbeispiel der vorliegenden Erfindung.

### Detaillierte Beschreibung von Ausführungsbeispielen

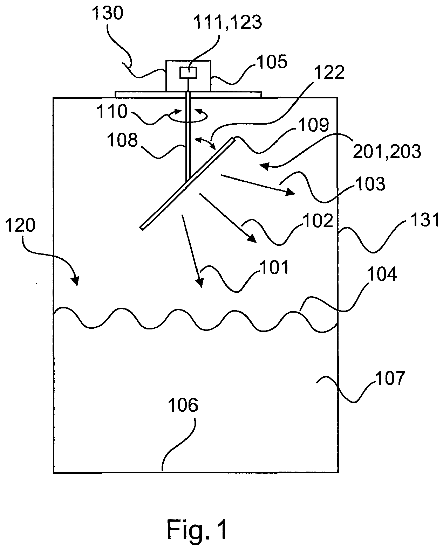

Die Darstellungen in den Figuren sind schematisch und nicht maßstäblich. In der folgenden Beschreibung der Fig. 1 bis 5 werden die gleichen Bezugsziffern für gleiche oder sich entsprechende Elemente verwendet.

Ohne Einschränkung der allgemeinen Gültigkeit, mag in der folgenden Beschreibung der Figuren im Wesentlichen auf eine Linearantenne 201 eingegangen werden. Die Beschreibung und Prinzipien gelten jedoch auch entsprechend für die zweidimensionale Arrayantenne 203.

Fig. 1 zeigt ein Füllstandmessgerät 105 oder topologieerfassendes Radarmessgerät 105 gemäß einem exemplarischen Ausführungsbeispiel der vorliegenden Erfindung. Das Messgerät 105 oder Feldgerät 105, insbesondere das Füllstandmessgerät 105, ist in der Lage, Echosignale oder Echokurven aus unterschiedlichen Winkelbereichen 101, 102, 103 oder Hauptempfangsrichtungen 101, 102, 103 zu erfassen. Das Füllstandmessgerät 105 weist eine Steuereinrichtung 111 und eine Auswerteeinrichtung 123 auf und wird über die Zweileiterverbindung 130 mit Energie versorgt. Die Zweileiterverbindung 130 kann auch zur Übertragung von Daten genutzt werden, beispielsweise um den ermittelten Füllstand an eine zentrale Warte (nicht gezeigt in Fig. 1) weiterzugeben. Die Winkelbereiche 101, 102, 103 sind als Beispiele für einstellbare Hauptstrahlrichtungen oder für einstellbare Hauptempfangsrichtungen zu sehen. Es lässt sich mit der in Fig. 1 dargestellten Anordnung je nach Einstellung und je nach Ausrichtung der Antennenvorrichtung 201, 203, ein Winkelbereich 122 von 0° bis 180° erfassen. Durch die Drehung der Antennenhalterung 108 lässt sich so die gesamte dreidimensionale Oberfläche 120 des Objekts 104 erfassen. Zu jeder in eine Raumrichtung ermittelte Echokurve wird die Distanz oder der Abstand zum jeweiligen Punkt der Oberfläche des Objekts 104 ermittelt, beispielsweise der Abstand zu dem Schüttgut 104 oder dem Füllgut 104. Durch numerische Integration dieser Distanzwerte und unter Postulierung einer ebenen Oberfläche 106, insbesondere eines ebenen Behälterbodens 106, unter dem Schüttgut 104 oder unter dem Füllgut 104 kann das Volumen der Schütthalde 107 ermittelt werden.

Zur mechanischen Abtastung weist das Füllstandmessgerät 105 die Antennenhalterung 108 mit der Antennenbasis 109 zur Befestigung einer Antenne 201, 203 oder Antennenvorrichtung 201, 203 auf. Die Antennenbasis 109 und die Antennenhalterung 108 bilden eine Verstelleinrichtung, die von der Steuereinrichtung 111 ausgerichtet werden kann. Die Verstelleinrichtung 109, 108 kann mit einem Motor gesteuert werden. Auf diese Art und Weise kann eine motorisch gesteuerte Planarantenne oder eine motorisch gesteuerte Hornantenne realisiert werden, je nachdem, welcher Typ von Antennenvorrichtung auf der Antennenbasis 109 montiert wird. Je nach Ausgestaltung des Füllstandmessgeräts 105 kann die Antennenbasis 109 ein mechanisches Verstellen einer Hauptstrahlrichtung einer an der Antennenbasis 109 angebrachten Antennenvorrichtung 201, 203 beispielsweise durch ein Drehen der Antennenhalterung 108 um eine Drehachse ermöglichen und/oder durch ein Verkippen um einen Kippwinkel 122. Das Drehen ist mit dem Pfeil 110 angedeutet und das Kippen ist durch den Pfeil 122 dargestellt ist.

Zusätzlich oder alternativ zu dem mechanischen Drehen 110 und/oder dem Verkippen 122 kann die Hauptstrahlrichtung 101, 102, 103 oder Hauptempfangsrichtung 101, 102, 103 der Antenne 201, 203 oder Antennenvorrichtung 201, 203 durch Verfahren der digitalen Strahlformung ergänzt oder ersetzt werden.

Kommt ein Antennenarray mit zumindest einer Sendeeinrichtung und zumindest zwei Empfangseinrichtungen zum Einsatz, kann pro Messung eine Vielzahl von Hauptstrahlrichtungen und/oder Hauptempfangsrichtungen ermittelt werden und insbesondere eine Vielzahl von Echokurven aus dieser Vielzahl von Raumrichtungen. Um die Oberfläche 120 des Schüttguts 104 oder eines anderen Objekts 104 abtasten zu können, wird ein Sendesignal von einer Sendeeinrichtung der Antennenvorrichtung in im Wesentlichen alle Raumrichtungen versandt. Es erfolgt sozusagen eine Beleuchtung des interessierenden Bereichs mit einem Kugelstrahler. Durch eine Auswertung der von den Empfangseinrichtungen der Antennenvorrichtung empfangenen Signale kann ein Empfangssignal in einer beliebigen Raumrichtung 101, 102, 103 bestimmt werden. So kann mit nur einer Messung ein Empfangssignal in den unterschiedlichen Winkelbereichen 101, 102, 103 gebildet werden, um so die Oberfläche 120 des Schüttguts 104 unter den verschiedenen Winkelbereichen zu erfassen. Durch die Erfassung eines Empfangsstrahls unter den verschiedenen Winkelbereichen, lässt sich ein Empfangssignal über die Oberfläche 120 des Füllgutes führen. Zur Erfassung der verschiedenen Raumbereiche kommen Verfahren der digitalen Strahlformung zum Einsatz und es kann im Wesentlichen auch ohne eine mechanische Winkel verstellung 122 oder Drehung 110 eine Abtastung der Oberfläche 120 des Schüttguts 104 durchgeführt werden.

Um eine digitale Strahlformung zu ermöglichen, mag eine Antennenvorrichtung 201, 203 mit einer Vielzahl von Sendeeinrichtungen und Empfangseinrichtungen genutzt werden, welche an dem Antennenträger 109 oder der Antennenbasis 109 angebracht ist.

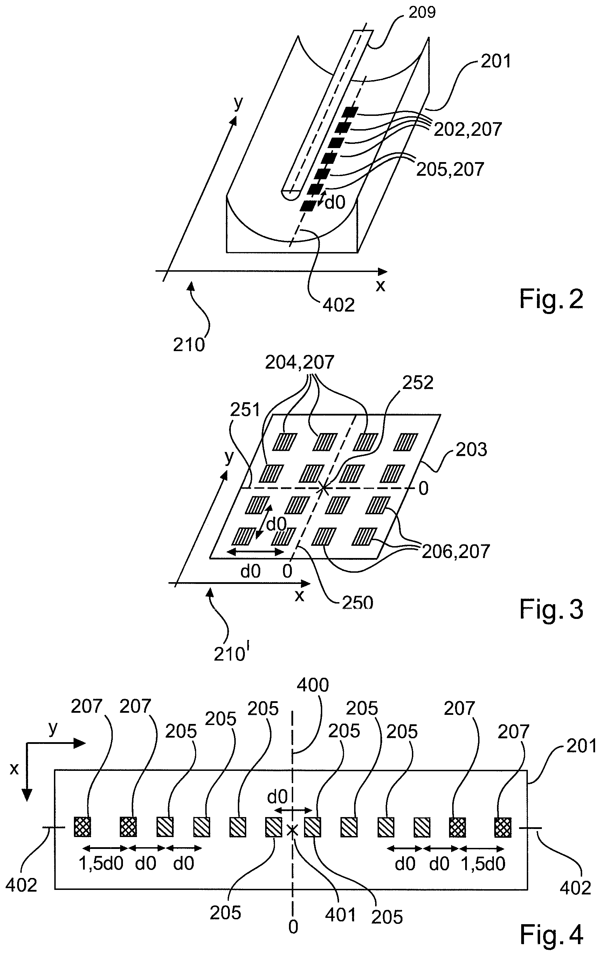

Fig. 2 zeigt eine perspektivische Darstellung einer linearen Parabolantennenvorrichtung 201 oder einer linearen Planarantennenvorrichtung 201 gemäß einem exemplarischen Ausführungsbeispiel der vorliegenden Erfindung. Da die Sendeeinrichtungen 202 und die Empfangseinrichtungen 205 linear parallel zu der in Fig. 2 dargestellten y-Achse des mit Bezugsziffer 210 bezeichneten Koordinatensystems 210 angeordnet sind, kann die Antennenvorrichtung 201 als Linear-Array 201 bezeichnet werden. Die Zusammenfassung der Sendeeinrichtungen 202 und Empfangseinrichtungen 205 kann als Antennengruppe bezeichnet werden. Die Sendeelemente 202 oder die Sendeeinrichtungen 202 werden von der Steuereinrichtung 111 angesteuert und die Empfangselemente 205 oder Empfangseinrichtungen 205 werden von der Auswerteeinrichtung 123 betrieben, um eine gewünschte Strahlformung zu erreichen und um eine Oberfläche 120 des Schüttguts 104 in einem vorgebbaren Bereich abtasten zu können. In Kombination mit der drehbaren Antennenhalterung 108 kann die Parabolrinne 201 oder das Linear-Array 201 auf dem Antennenträger 109 montiert zum Einsatz kommen. Das Linear-Array 201 kann eine mechanische Fokussierung der von den Sendeeinrichtungen 202 oder den Antennenelementen 202 abgestrahlten und/oder von den Empfangseinrichtungen 205 empfangenen elektromagnetischen Wellen entlang der in dem Koordinatensystem 210 dargestellten x-Richtung vornehmen. Für die mechanische Fokussierung ist eine Linearlinse 209 oder ein lineares Hyperbol 209 vorgesehen. Die Fokussierung der entsprechenden Signale entlang der y-Richtung des Koordinatensystems 210 oder entlang der Linearrichtung 402 erfolgt hingegen erst nach der Erfassung der empfangenen Signale innerhalb der Auswerteeinheit 123 oder Auswerteeinrichtung 123 durch DBF. Auf diese Art und Weise kann auch eine gezielte Steuerung der Hauptempfangsrichtung der Antenne 121 in der y-Richtung erfolgen. Anstelle von reinen Sendeeinrichtungen 202, und reinen Empfangseinrichtungen 205 können auch Sende-/Empfangseinrichtungen 207 genutzt werden, die an derselben Position senden und zugleich auch empfangen können. Sendeeinrichtungen 202, 204 und Empfangseinrichtungen 205, 206 können durch Sende-/Empfangseinrichtungen 207 ersetzt werden. Die einzelnen Sendeeinrichtungen 202, 204, 207 und/oder Empfangseinrichtungen 205, 206, 207 weisen untereinander einen Abstand von d₀ auf und orientieren sich an einem Raster.

Fig. 3 zeigt ein zweidimensionales (2D) Antennenarray 203 oder eine 2D Planarantennenvorrichtung 203 gemäß einem exemplarischen Ausführungsbeispiel der vorliegenden Erfindung. Das zweidimensionale Antennenarray weist eine Ausdehnung in zwei Raumrichtungen, beispielsweise in die x-Richtung und die y-Richtung auf, wie durch das Koordinatensystem 210' angedeutet ist. Fig. 3 zeigt die Anordnung der Sendeeinrichtungen 204 und der Empfangseinrichtungen 206 auf dem Antennenarray 203. Anstelle von reinen Sendeeinrichtungen 204 und reinen Empfangseinrichtungen 206 können Sende-/Empfangseinrichtungen 207 genutzt werden, die an derselben Position senden und zugleich auch empfangen können. Die einzelnen Sendeeinrichtungen und/oder Empfangseinrichtungen weisen untereinander einen Abstand von d₀ auf. Es mag in einem Beispiel auch vorgesehen sein, eine Vielzahl i unterschiedlicher Rasterabstände di innerhalb einer Sendeeinrichtung und/oder Empfangseinrichtung zu realisieren, wobei sich die Abstände dᵢ von do unterscheiden. Ein Antennenarray 203 kann in Kombination mit einer starren Antennenhalterung 108 und einem starren Antennenträger 109 eingesetzt werden. In Kombination mit der statischen Antennenhalterung 108 kann das zweidimensionale Antennenarray 203 trotz statischer Anordnung eine Abtastung in zwei Raumrichtungen ermöglichen. Das zweidimensionale Antennenarray 203 weist eine Vielzahl von Sendeeinrichtungen 204 und/oder Empfangseinrichtungen 206 entlang der x-Achse und entlang der y-Achse auf. Diese sind symmetrisch zu den Symmetrieachsen 250 und 251 angeordnet. Die Sendeeinrichtungen 204, 207 und Empfangseinrichtungen 206, 207 sind rasterförmig in einem Rasterabstand do angeordnet. Dieser Rasterabstand entspricht beispielsweise der halben Wellenlänge des eingesetzten Sendesignals, welches von der Steuereinrichtung 111 in den jeweiligen Sendeeinrichtungen 202, 204 angeregt wird. Das Einhalten des durch das Abstandskriterium vorgegebenen Abstands von λ/2 kann Gitterkeulen reduzieren. Ein entsprechend geladenes Programm, welches für das Ansteuern und/oder das Auswerten des zweidimensionalen Antennenarrays 203 oder des linearen Antennenarrays 201 eingerichtet ist, verknüpft die von den Empfangseinrichtungen 205, 206, 207 empfangenen Signale gemäß dem Verfahren der zweidimensionalen digitalen Strahlformung und gemäß der eingesetzten Antennenbauform 201, 203.

Zum Zwecke der digitalen Strahlformung (DBF) und insbesondere für die Bildung eines virtuellen Arrays werden die Sendeeinrichtungen 202, 204 in einem Zeitmultiplexverfahren sequenziell oder nacheinander angeregt, um ein Sendesignal auszusenden. Um die digitale Strahlformung zu erreichen, kann als Alternative zu dem Zeitmultiplexverfahren ein speziell codiertes Sendesignal, z.B. eine orthogonale Signalform, benutzt werden. Wenn ein codiertes Sendesignal zur Unterscheidung einzelner Sender 202, 204 genutzt wird, insbesondere zur Unterscheidung einzelner Sendepositionen, können die Sendeeinrichtungen 202, 204 gleichzeitig zum Senden angeregt werden. Durch das gleichzeitige Anregen kann ein Messzyklus verkürzt werden. Die Codierung ermöglicht es trotz des gleichzeitigen Sendens die Position der Signalquelle zu bestimmen, um so die von jedem einzelnen der Sendeeinrichtungen 202, 204 erzeugten Signale unterscheiden zu können. Sowohl das Zeitmultiplexverfahren als auch die Codierung kann genutzt werden ein Empfangssignal eindeutig einer bestimmten Sendeeinrichtung 202, 204, 207 der Vielzahl von Sendeeinrichtungen 202, 204, 207 zuzuordnen.

Um ungewünschte Gitterkeulen (Grating-Lobes) zu vermeiden, kann beim Einsatz des Verfahrens der digitalen Strahlformung die physikalische Distanz do zwischen zwei benachbarten Antennenelementen 202, 204, 205, 206, 207 kleiner oder gleich der halben Wellenlänge der verwendeten Radarsignale, Sendesignale und/oder Empfangssignale gewählt werden. Diese Einschränkung kann aufgrund der für die bei der Füllstandmesstechnik eingesetzten Radarsignale im Bereich von 79 GHz zu einer hohen Zahl an Antennenelementen 202, 205, 204, 206 führen.

Außerdem können Füllstandmessgeräte 105 bei der Verwendung einzelner Sendeelemente 202, 204 im Zeitmultiplex wegen der begrenzten Leistung von verfügbaren Halbleiterbauelementen nur mit einer begrenzten Sendeleistung oder Sendeenergie in Richtung des Schüttguts 104 abstrahlen. Bei der Abstrahlung findet noch keine digitale Strahlformung statt, sodass mittels der Sendeeinrichtungen 202, 204, 207 die gesamte Oberfläche 120 eines Schüttguts oder Objekts 104 angestrahlt oder beleuchtet werden muss. Soll mit solch einer schwachen Strahlung ein Schüttgut mit schwach reflektierenden Medieneigenschaften gemessen werden, so kann ein von diesem Schüttgut 104 reflektiertes Signal so gering sein, dass eine Erfassung im Wesentlichen nicht mehr möglich ist.

Fig. 4 zeigt eine Draufsicht auf eine Antennenvorrichtung 201 oder auf ein physikalisches Array 201 mit linear angeordneten Sendeeinrichtungen 202 und Sende-/Empfangseinrichtungen 207 gemäß einem exemplarischen Ausführungsbeispiels der vorliegenden Erfindung. Die Sende-/Empfangseinrichtungen 207 werden statt reiner Empfangseinrichtungen 206 eingesetzt, die nur empfangen können. Die Sende-/Empfangseinrichtungen 207 können in Abhängigkeit ihrer Ansteuerung entweder als Sendeeinrichtung 202 oder als Empfangseinrichtung 205 betrieben werden. Somit könnte die Antennenvorrichtung 201 auch aus lediglich Sende-/Empfangseinrichtungen 207 aufgebaut sein, von denen ein Teil als Sendeeinrichtung 202 und ein anderer Teil als Empfangseinrichtung 205 betrieben wird. Folglich mag es möglich sein, elektronisch die Anordnung der Sendeeinrichtungen 202 und Empfangseinrichtungen 205 bzw. 204 und 206 in dem Array 203 zu verändern, beispielsweise gesteuert durch die Steuereinrichtung 111 oder die Auswerteeinrichtung 123.

Die Sende-/Empfangseinrichtungen 207 und Empfangseinrichtungen 205 sind in einer rechteckigen Parabolrinne linear bezogen auf eine Bezugslinie 402 in y-Richtung angeordnet. Die y-Richtung verläuft parallel zu den längeren der vier Seiten der rechteckförmigen Linearantenne. Dabei sind die Sende-/Empfangseinrichtungen 207 und Empfangseinrichtungen 205 an einem Raster ausgerichtet, welches sich auf die verwendete Wellenlänge der Sendesignale bezieht. Durch das Raster werden die vorgebbaren Positionen der Sende-/Empfangseinrichtungen 207 und Empfangseinrichtungen 205 bestimmt. Der Abstand do zwischen zwei benachbarten Elementen, d.h. zwischen Empfangseinrichtungen 204, 206, zwischen Sendeeinrichtungen 202, 205 und/oder Sende-/Empfangseinrichtungen 207, beträgt im Wesentlichen eine Wellenlänge oder d₀ = λ und erfüllt somit nicht das Abstandskriterium. Ausgehend von dem Bezugspunkt 401 auf der Bezugslinie 400 befinden sich die ersten beiden Empfangseinrichtungen 205 symmetrisch zu der Bezugslinie 400 und sind an den Positionen bei d₀/2 und -d₀/2 und/oder bei λ/2 und -λ/2 angeordnet. Das Rastermaß beträgt d₀/2 oder λ/2, jedoch sind nicht alle Rasterpositionen mit Elementen 202, 204,205, 206, 207 besetzt. Die Bezugslinie 400 ist eine Symmetrieachse 400 für die Antennenvorrichtung 201. Die nächsten beiden Empfangseinrichtungen 205 befinden sich bei 3d₀/2 und -3d₀/2. Die nächsten beiden Empfangseinrichtungen befinden sich bei 5d₀/2 und bei -5d₀/2 und die äußersten Empfangseinrichtungen 205 befinden sich bei 7d₀/2 und -7d₀/2. Somit weisen benachbarte Empfangselemente 205 den regelmäßigen Abstand d₀ oder λ auf.

Bei dem Übergang von den Empfangseinrichtungen 205 zu den Sende-/Empfangseinrichtungen 207 weisen benachbarte Elemente ebenfalls den Abstand do auf. Es finden sich Sende-/Empfangseinrichtungen 207 an den vorgebbaren Positionen 9d₀/2 und -9d₀/2 oder 9λ/2 und -9λ/2. Die äußersten Sende-/Empfangseinrichtungen 207 befinden sich an den vorgebbaren Positionen 12d₀/2 und -12d₀/2 bzw. 12λ/2 und -12λ/2 und weichen damit von dem regelmäßigen Aufbau ab.

Das zweidimensionale physikalische Array 203 aus Fig. 3 weist einen entsprechenden regelmäßigen Aufbau auf, wobei dieses sich in x-Richtung an der Bezugslinie 250 orientiert und in y-Richtung an der Bezugslinie 251, wodurch sich ein Bezugspunkt 252 im Schwerpunkt der Fläche des Antennenarrays 203 ergeben kann.

Es ist der Fig. 3 und Fig. 4 zu entnehmen, dass jeweils in den Bezugspunkten 401, 252 keine physikalische Sendeeinrichtung 202, 204, keine physikalische Empfangseinrichtung 205, 206 und keine physikalische Sende-/Empfangseinrichtung 207 angeordnet ist. Die Fig. 4 weist somit ein lineares Antennenarray mit acht Empfangseinrichtungen 205 und mit vier Sende-/Empfangseinrichtungen 207 auf.

Die Antennenvorrichtung 201 aus Fig. 4 kann in unterschiedlichen Betriebsmodi angesteuert werden. Für die Betriebsmodi kann die Steuereinrichtung 111 und die Auswerteeinrichtung 123 entsprechend angepasst sein, beispielsweise indem ein entsprechendes Programm geladen wird.

Ein erster Betriebsmodus mag vorsehen, nur eine der Vielzahl von Sendeeinrichtungen 202, 207 anzusteuern und mit nur einer der Vielzahl von Empfangseinrichtungen 205 ein von der Sendeeinrichtung 202, 207 ausgesendetes Sendesignal nach einer Reflexion als Empfangssignal zu empfangen. In diesem Betriebsmodus mag die mechanische Einstellung der Antennenvorrichtung mittels der Verstelleinrichtung 108, 109 dafür sorgen, dass Empfangssignale aus unterschiedlichen Raumwinkeln empfangen werden und die Oberfläche des Objekts 104 (nicht in Fig. 4 dargestellt) abgetastet wird. Es kann in einem Beispiel eine von einem Motor gesteuerte Hornantenne eingesetzt werden, deren Horn zur Ausrichtung der von den Sendeeinrichtungen und/oder Empfangseinrichtungen generierten elektromagnetischen Signale genutzt wird.

In einem zweiten Betriebsmodus mag die Verstelleinrichtung 108, 109 starr oder nicht mechanisch bewegbar sein und auf einen festen Winkel ausgerichtet sein. Jedoch wird mittels zumindest einer der Sendeeinrichtungen 202, 207 oder einer Vielzahl von Sendeeinrichtungen 202, 207 und/oder einer entsprechenden Anzahl von Sende-/Empfangseinrichtungen 207 im Wesentlichen gleichzeitig ein Sendesignal ausgesendet. Das reflektierte Empfangssignal wird von zumindest zwei Empfangseinrichtungen 205, 207 und/oder Sende-Empfangseinrichtungen 207 empfangen. Die Auswerteeinrichtung 123 kann durch das Anwenden von Methoden der DBF Echokurven aus mehreren vorgebbaren Raumrichtungen oder aus einer Vielzahl von Hauptempfangsrichtungen 101, 102, 103 bestimmen. Auf diese Art und Weise kann die Oberfläche des Objekts 104 digital gesteuert abgetastet werden.

In einem dritten Betriebsmodus mögen zumindest zwei Sendeeinrichtungen 202, 207 und/oder zumindest zwei Sende-/Empfangseinrichtungen in einem Zeitmultiplexverfahren betrieben werden, so dass die Auswerteeinrichtung ein virtuelles Array bestimmen kann. Für die Bildung des virtuellen Arrays wertet die Auswerteeinrichtung die Empfangssignale von zumindest zwei Empfangseinrichtungen 205, 207, das Zeitschema der Sendefolge und/oder die Lage der einzelnen Sendeelemente 202, 207 und Empfangselemente 205, 207 zueinander aus.

In einem vierten Betriebsmodus, kann zusätzlich zu dem Ablauf des dritten Betriebsmodus vorgesehen sein, dass die zumindest zwei Sendeeinrichtungen 202, 207 und/oder die zumindest zwei Sende-/Empfangseinrichtungen zu einem Zeitpunkt des Zeitmultiplexverfahrens gleichzeitig aktiviert werden, um eine zusätzliche Sendeeinrichtung zu emulieren.

Unabhängig von dem eingesetzten Betriebsmodus für die Topologiemessung kann ein Füllstandmessgerät 105, welches die Antennenvorrichtung 201, 203 nutzt, so eingerichtet sein, dass es in einen reinen Füllstandmessmodus wechselt, wenn es eine Verschlechterung von Reflexionsverhältnissen und/oder der mechanischen Komponenten 108, 109 erkennt. Dabei mag der Zeitpunkt des Wechsels in den Füllstandmessmodus unabhängig von einem eingesetzten Messzyklus erfolgen und ereignisgesteuert oder auch zeitgesteuert sein. Um in den reinen Füllstandmessbetrieb zu wechseln mag, falls zumindest zwei Sendeeinrichtungen 202, 207 vorgesehen sind, im Wesentlichen die Anzahl der gemeinsam betriebenen Sendeeinrichtungen erhöht werden, um so viele Sendeeinrichtungen 202, 207 wie möglich zu nutzen und um die Signalstärke, die Signalleistung oder die Signalenergie zu erhöhen. Gleichzeitig gesendete Signale können sich so überlagern, dass ihre Energie aufsummiert wird. Während der Betriebsphase des Füllstandmessbetriebs mögen mindestens zwei Sendeeinrichtungen gleichzeitig aktiviert werden, um ein Sendesignal zu generieren und um dieses Sendesignal mit zumindest zwei Empfangseinrichtungen zu empfangen, um eine digitale Strahlformung in die Richtung der maximalen Reflektion und/oder andere Richtungen zu ermöglichen. Die maximale Reflektion mag diejenige Hauptempfangsrichtung der Vielzahl von Hauptempfangsrichtungen bezeichnen, in der ein Empfangssignal die größte Empfangsenergie und/oder das größte Signal-Zu-Rausch-Verhältnis aufweist. Die digitale Strahlformung mag bei dem gleichzeitigen Betrieb der Sendeeinrichtungen zur Energieerhöhung so erfolgen, dass im Wesentlichen nur eine einzige Echokurve aus einer einzigen Raumrichtung 101, 102, 103 oder Hauptempfangsrichtung 101, 102, 103 bestimmt wird. Diese einzige Raumrichtung 101, 102, 103 mag so vorgegeben sein, dass sie im Wesentlichen senkrecht zu einer Objektoberfläche verläuft. In einem anderen Beispiel mag die einzige Raumrichtung 101, 102, 103 so vorgegeben sein, dass sie im Wesentlichen parallel zu einer Wand eines Behälters 131 verläuft. In noch einem anderen Beispiel mag die Raumrichtung 101, 102, 103 so gewählt werden, dass aus dieser eine möglichst große reflektierte Sendeenergie erfasst werden kann. Die Erfassung einer großen reflektierten Sendeenergie oder einer großen Empfangsenergie kann erreicht werden, indem zunächst Echokurven für eine Vielzahl an Raumrichtungen 101, 102, 103 mit Hilfe der digitalen Strahlformung ermittelt werden, und anschließend für jede Echokurve die maximale reflektierte Energie bestimmt wird. Ein Vergleich dieser ermittelten maximalen Energiewerte ermöglicht die Bestimmung der Richtung 101, 102, 103 mit maximaler Reflektion. Wird die einzige Echokurve in Richtung dieser Raumrichtung mit maximaler Reflektion ermittelt kann eine zuverlässige Messung des Füllstandes erfolgen. Oftmals mag diese Richtung der maximalen Reflektion die senkrechte Richtung zu der Objektoberfläche sein. Sollte eine Raumrichtung aus einem anderen Winkel die Raumrichtung mit der maximalen Reflektion sein, so wird die Neigung der Raumrichtung 101, 102, 103 zur Objektoberfläche bei der Abstandsberechnung beachtet und, wenn nötig, herausgerechnet oder kompensiert.

Im Falle der mechanischen Abtastung des ersten Betriebsmodus mag zum Zwecke der Ermittlung der einzigen Echokurve die Verstelleinrichtung die Antennenvorrichtung so ausrichten, dass im Wesentlichen ein Empfangssignal senkrecht zur Objektoberfläche und/oder parallel zur Behälterwand empfangen werden kann. Die Antennenvorrichtung 201, 203 mag in dieser Position starr gehalten werden, bis das Qualitätsmaß eine erneute Oberflächenerfassung zulässt.

Wird im Falle der motorisch gesteuerten Hornantenne ein Defekt des Motors erkannt, wird eine Fehlermeldung von der Auswerteeinrichtung generiert und ausgegeben. Wenn es möglich ist, kann die Auswerteeinrichtung die Hornantenne noch direkt auf die Objektoberfläche ausrichten, um den Abstand zu der Objektoberfläche zu messen. Sollte die Ausrichtung auf die Objektoberfläche nicht mehr möglich sein, kann der Winkel unter dem dann die Objektoberfläche erfasst wird, kompensiert werden und/oder es kann eine Warnmeldung ausgegeben werden, die anzeigt, dass keine Messung mehr möglich ist oder dass nur noch eine eingeschränkte Messung möglich ist.

Mit der Erfassung der Echokurve aus einer einzigen Raumrichtung während einer Topologiemessung kann ein gutes S/N - Verhältnisses (Signal/Rausch-Abstand) beim Betrieb eines topologieerfassenden Füllstandmessgerätes 105 erreicht werden. Das zeit- oder ereignisgesteuertes Umschalten des Messgerätes in einen reinen Füllstandmessbetrieb unter Aktivierung aller Sender oder das motorische Ausrichten einer Antennenvorrichtung kann zur Verbesserung des S/N auch bei schlecht reflektierenden Medien, schlechten Messverhältnissen oder zur Plausibilitätsüberprüfung eingesetzt werden.

Mittels der Antennenvorrichtung und des Verfahrens kann eine Anordnung 201, 203 von Sendeeinrichtungen 202, 204, 207 und Empfangseinrichtungen 205, 206, 207, welche zur digitalen Strahlformung und zur Erfassung der Oberflächentopologie eines Schüttgutes verwendet wird, genutzt werden, ein Qualitätsmaß für eine Messung einzuhalten. Bei einer Abweichung des Qualitätsmaßes von einer vorgebbaren Schwelle oder beim Auftreten eines Fehlers können zumindest zwei der vorhandenen Sendeelemente gleichzeitig aktiviert werden und/oder eine Fehlermeldung ausgegeben werden. Diese gleichzeitige Aktivierung kann dazu genutzt werden, dass mehr Sendeenergie in Richtung des zu messenden Mediums 104 abgestrahlt wird, und somit das erreichbare S/N insbesondere bei schlecht reflektierenden Medien verbessert wird. In einem Beispiel lässt sich eine Plausibilitätsprüfung der 3D-Messung mittels einer Füllstandmessung in einer einzigen Raumrichtung durchführen.

Der Betriebsmodus eines Füllstandmessgerätes, welcher zur Erfassung der Topologie einer Schüttgutoberfläche vorgesehen ist, kann in einen Betriebsmodus umgeschaltet werden, in dem eine einfache Füllstandmessung mit einer sehr hohen Empfindlichkeit und/oder Messrate durchgeführt wird. Die Empfindlichkeit kann auch erhöht werden, indem die Sendeenergie erhöht wird, wozu eine Energieeinstelleinrichtung genutzt wird, die Teil der Steuereinrichtung sein kann.

Das gemeinsame Nutzen der Elemente 202, 204,205, 206,207 einer Antennenvorrichtung, kann zu einer kleinen Bauform eines Topologie-Füllstandmessgeräts 105 mit Plausibilitätsmessung führen, da nicht zwei separate Messgeräte vorgesehen sein müssen, nämlich ein Füllstandmessgerät für eine feste Raumrichtung und ein Topologiemessgerät zur Erfassung der Oberfläche.

Die Plausibilitätsmessung kann beispielsweise zeitgesteuert nach jedem Messzyklus, in dem eine Echokurve aus einer vorgebbaren Raumrichtung bestimmt worden ist, als eine zusätzliche Messung durchgeführt werden. In einem anderen Beispiel kann die Plausibilitätsprüfung zeitgesteuert nach einer vorgebbaren Anzahl von durchgeführten Messzyklen als Korrektur und Plausibilitätsmessung eingefügt werden. In einem noch anderen Beispiel kann die Plausibilitätsprüfung ereignisgesteuert erst dann durchgeführt werden, wenn ein Qualitätsmaß unterschritten wird und/oder wenn ein Fehler auftritt. Dazu mag die Auswerteeinrichtung regelmäßig das Qualitätsmaß und/oder die Funktionsfähigkeit der Verstelleinrichtung überwachen. Falls ein Fehler auftritt und/oder falls sich die Ergebnisse einer Füllstandmessung mittels der Topologiemessung und die Ergebnisse, die bei der Plausibilitätsmessung gewonnen werden, über eine vorab definierte Toleranzschwelle oder Qualitätsmaß hinaus unterscheiden oder falls ein vorgegebenes Qualitätsmaß einer der beiden Messungen nicht eingehalten wird, kann das Topologiemessgerät 105 oder das Füllstandmessgerät 105 eine Warnmeldung erzeugen. Die Topologiemessung mag unter Zuhilfenahme eines Zeitmultiplexverfahrens und/oder dem zusätzlichen Aktivieren von zumindest zwei Sendeeinrichtungen erfolgen. Die Plausibilitätsmessung mag durch eine normale Schüttgutmessung oder Füllstandmessung mit der gleichzeitigen Aktivierung der Sendeeinrichtungen erfolgen.

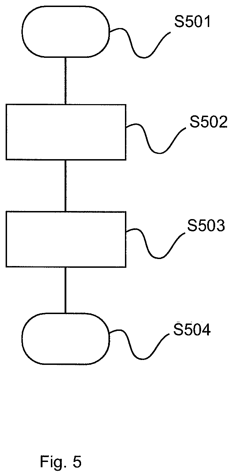

Fig. 5 zeigt ein Flussdiagramm für ein Verfahren zum Betreiben einer Antennenvorrichtung gemäß einem exemplarischen Ausführungsbeispiel der vorliegenden Erfindung. Das Verfahren zum Betreiben einer Antennenvorrichtung startet in dem Startzustand S501. Im Schritt S502 sieht das Verfahren, das Aussenden eines Sendesignals mit zumindest einer ersten Sendeeinrichtung und das Empfangen von zumindest zwei Empfangssignalen über zumindest eine erste Empfangseinrichtung vor. Das Verfahren sieht weiter vor, einen Verlauf einer Oberfläche eines Objekts aus den empfangenen zumindest zwei Empfangssignalen zu bestimmen. Wird im Schritt S503 ein Fehler erkannt, der beim Bestimmen des Verlaufs der Oberfläche des Objekts auftritt, wird die Steuereinrichtung derart angesteuert, dass die Auswerteeinrichtung statt den Verlauf der Oberfläche des Objekts einen Abstand der Oberfläche des Objekts von der Sendeeinrichtung und/oder von der Empfangseinrichtung bestimmt. Es wird folglich von einer Topologiemessung zu einer reinen Füllstandmessung umgeschaltet. Im Schritt S504 endet das Verfahren.

Alternativ kann das Verfahren im Schritt S502 ein Sendesignal mit der zumindest einen Sendeeinrichtung aussenden und verzögert um die Signallaufzeit zu der Objektoberfläche und zurück zumindest zwei Empfangssignale über zumindest eine Empfangseinrichtung empfangen. Beispielsweise wird für das Empfangen von zwei Empfangssignalen eine Sendeeinrichtung gleichzeitig in einem Empfangsbetriebsmodus betrieben, d.h. als Sende-/Empfangseinrichtung. Oder es wird, beispielsweise im Falle einer mechanischen Abtastung, die Position der Sendeeinrichtung und/oder der Empfangseinrichtung weiterbewegt und ein erneutes Sendesignal ausgesendet, um zumindest zwei Empfangssignale zu erhalten.

Im Falle von der Nutzung einer Vielzahl von Sendeeinrichtungen und einer Vielzahl von Empfangseinrichtungen kann eine Anzahl an Sendesignalen verschickt werden, die maximal der Anzahl an vorhandenen Sendeeinrichtungen entspricht. Und es kann eine Anzahl an Empfangssignalen empfangen werden, die maximal der Anzahl der vorhandenen Empfangseinrichtungen entspricht. Darüber hinaus werden aus den zumindest zwei Empfangssignalen zumindest zwei Echokurven für zumindest zwei vorgebbare Raumrichtungen bestimmt, um eine Oberfläche eines Objekts zu erfassen.

In Schritt S503 wird ein Qualitätsmaß für die zumindest zwei Empfangssignale bestimmt und dieses Qualitätsmaß wird mit einem vorgebbaren Schwellwert oder einer vorgebbaren Schranke verglichen. Wenn das Qualitätsmaß von diesem vorgebbaren Schwellwert für das Qualitätsmaß für die zumindest zwei Empfangssignale abweicht, wird eine Energie des Sendesignals erhöht und im Wesentlichen nur eine einzige Echokurve für eine einzige vorgebbare Raumrichtung bestimmt. Es wird also von einer mehrdimensionalen Topologiemessung auf eine eindimensionale Messung umgeschaltet. Beispielsweise wird von einer mehrdimensionalen Füllstandmessung auf eine eindimensionale Messung umgeschaltet. Ergänzend ist darauf hinzuweisen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Antennenvorrichtung (201, 203), aufweisend:
eine Steuereinrichtung (111);
eine Auswerteeinrichtung (123);
zumindest eine erste Sendeeinrichtung (202, 204, 207);
zumindest eine erste Empfangseinrichtung (205, 206, 207);
wobei die Steuereinrichtung (111) zum Aussenden eines Sendesignals mit der zumindest einen ersten Sendeeinrichtung (202, 204, 207) eingerichtet ist;
wobei die Auswerteeinrichtung zum Empfangen von zumindest zwei Empfangssignalen über die zumindest eine erste Empfangseinrichtung (205, 206, 207) eingerichtet ist;
wobei die Steuereinrichtung (111) eingerichtet ist, die zumindest eine erste Sendeeinrichtung (202, 204, 207) so zu betreiben, dass die Auswerteeinrichtung (123) aus den empfangenen zumindest zwei Empfangssignalen einen Verlauf einer Oberfläche (120) eines Objekts (104) bestimmt;
**dadurch gekennzeichnet,**
**dass** die Auswerteeinrichtung (123) eingerichtet ist, einen Fehler beim Bestimmen des Verlaufs der Oberfläche des Objekts zu erkennen; und
**dass** die Auswerteeinrichtung (123) eingerichtet ist beim Erkennen des Fehlers, die Steuereinrichtung (111) derart anzusteuern, dass die Auswerteeinrichtung statt den Verlauf der Oberfläche des Objekts einen Abstand der Oberfläche des Objekts von der Sendeeinrichtung und/oder von der Empfangseinrichtung bestimmt.

2. Antennenvorrichtung (201, 203) nach Anspruch 1,
wobei die Auswerteeinrichtung (123) eingerichtet ist, aus den zumindest zwei Empfangssignalen zumindest zwei Echokurven für zumindest zwei vorgebbare Raumrichtungen (101, 102, 103) zu bestimmen, um den Verlauf der Oberfläche (120) des Objekts (104) zu erfassen;
wobei die Auswerteeinrichtung (123) weiter eingerichtet ist, zum Erkennen des Fehlers beim Bestimmen des Verlaufs der Oberfläche (120) des Objektes (104) ein Qualitätsmaß für die zumindest zwei Empfangssignale zu bestimmen; und
wobei die Auswerteeinrichtung (123) eingerichtet ist, bei Abweichen des Qualitätsmaßes von einer vorgebbaren Schwelle für das Qualitätsmaß für die zumindest zwei Empfangssignale die Sendeeinrichtung anzuweisen eine Energie des Sendesignals zu erhöhen und eine einzige Echokurve für eine einzige vorgebbare Raumrichtung zu bestimmen.

3. Antennenvorrichtung (201, 203) nach Anspruch 2, weiter aufweisend
zumindest eine zweite Empfangseinrichtung (205, 206, 207);
wobei die Auswerteeinrichtung (123) eingerichtet ist, über die zumindest eine erste Empfangseinrichtung (205, 206, 207) und über die zumindest eine zweite Empfangseinrichtung (205, 206, 207) je eines der zumindest zwei Empfangssignale zu empfangen; und
wobei die Auswerteeinrichtung (123) eingerichtet ist, bei Abweichen des Qualitätsmaßes von der vorgebbaren Schwelle für das Qualitätsmaß ein zusätzliches weiteres Sendesignal auszusenden, um die Energie des Sendesignals zu erhöhen, und um eine Echokurve für die einzige vorgebbare Raumrichtung zu bestimmen

4. Antennenvorrichtung (201, 203) nach Anspruch 3, die Antennenvorrichtung weiter aufweisend:
zumindest eine zweite Sendeeinrichtung (202, 204, 207);
wobei die Steuereinrichtung (111) eingerichtet ist, die zumindest eine erste Sendeeinrichtung (202, 204, 207) und die zumindest eine zweite Sendeeinrichtung (202, 204, 207) in einem Zeitmultiplexbetrieb, einem Frequenzmultiplex und/oder in einem Codemultiplexbetrieb zu betreiben,
wobei die Auswerteeinrichtung (123) eingerichtet ist, durch das Auswerten der von dem im Zeitmultiplexbetrieb, im Frequenzmultiplex und/oder in dem Codemultiplexbetrieb betriebenen zumindest zwei Sendeeinrichtungen (202, 204, 207) hervorgerufenen Empfangssignale durch Anwenden des Verfahrens der digitalen Strahlformung zumindest zwei Echokurven für zumindest zwei vorgebbare Raumrichtungen zu bestimmen; und
wobei die Auswerteinrichtung (123) weiter eingerichtet ist, beim Abweichen des Qualitätsmaßes von der vorgebbaren Schwelle für das Qualitätsmaß für die Empfangssignale, von dem Zeitmultiplexbetrieb, von dem Frequenzmultiplex und/oder von dem Codemultiplexbetrieb in einen Parallelbetrieb der zumindest einen ersten Sendeeinrichtung (202, 204, 207) und/oder der zumindest einen zweiten Sendeeinrichtung (202, 204, 207) und/oder zumindest einer der ersten Empfangseinrichtung (205, 206, 207) und der zweiten Empfangseinrichtung (205, 206, 207) umzuschalten, um die Energie des Sendesignals zu erhöhen, und um eine Echokurve für eine einzige vorgebbare Raumrichtung zu bestimmen.

5. Antennenvorrichtung (201, 203) nach einem der Ansprüche 2 bis 4, wobei die Antennenvorrichtung (201, 203) weiter aufweist
eine Verstelleinrichtung (108, 109) zum mechanischen Einstellen der zumindest einen ersten Empfangseinrichtung (202, 204, 207) in zumindest zwei vorgebbare Raumrichtungen, um die zumindest zwei Empfangssignale aus zumindest zwei Raumrichtungen zu empfangen;
wobei die Auswerteeinrichtung (123) eingerichtet ist, beim Abweichen des Qualitätsmaßes von der vorgebbaren Schwelle für das Qualitätsmaß der zumindest zwei Empfangssignale, die Verstelleinrichtung (108, 109) fest in der einzigen vorgebbare Raumrichtung einzustellen, um die Energie des Sendesignals zu erhöhen und um die einzige Echokurve für die einzige vorgebbare Raumrichtung zu bestimmen.

6. Antennenvorrichtung (201, 203) nach Anspruch 5, wobei die Antennenvorrichtung (201, 203) weiter aufweist:
eine weitere Sendeeinrichtung (202, 204, 207);
wobei die Steuereinrichtung (111) eingerichtet ist, während die Verstelleinrichtung (108, 109) fest in der einzigen vorgebbaren Raumrichtung eingestellt ist, über die weitere Sendeeinrichtung (202, 204, 207) ein weiteres Sendesignal auszusenden.

7. Antennenvorrichtung (201, 203) nach einem der Ansprüche 2 bis 6, wobei die Antennenvorrichtung weiter aufweist:
eine Energieeinstelleinrichtung;
wobei die Energieeinstelleinrichtung eingerichtet ist, von der Sendeeinrichtung angewiesen zu werden, die Energie des Sendesignals zu erhöhen.

8. Antennenvorrichtung (201, 203) nach einem der Ansprüche 2 bis 7, wobei benachbarte Sendeeinrichtungen (202, 204, 207) und/oder Empfangseinrichtungen (205, 206, 207) einen Abstand von kleiner oder gleich der halben Wellenlänge des Sendesignals aufweisen.

9. Antennenvorrichtung (201, 203) nach einem der Ansprüche 1 bis 8, wobei die Antennenvorrichtung (201, 203), die Steuereinrichtung (111) und/oder die Auswerteeinrichtung (123) als Zweileitergerät ausgebildet ist.

10. Antennenvorrichtung (201, 203) nach einem der Ansprüche 1 bis 9, wobei die Antennenvorrichtung (201, 203) weiter aufweist
eine Verstelleinrichtung (108, 109) zum mechanischen Einstellen der zumindest einen ersten Sendeeinrichtung (202, 204, 207) und/oder der zumindest einen ersten Empfangseinrichtung (202, 204, 207), um den Verlauf der Oberfläche (120) des Objekts (104) durch ein mechanisches Verstellen der zumindest einen ersten Sendeeinrichtung (202, 204, 207) und/oder der zumindest einen ersten Empfangseinrichtung (202, 204, 207) zu bestimmen;
wobei die Auswerteeinrichtung (123) eingerichtet ist, beim Erkennen des Fehlers, die Verstelleinrichtung (108, 109) fest in einer vorgebbaren Position zu fixieren; und
um den Abstand der Oberfläche (120) des Objekts (104) von der Sendeeinrichtung (202, 204, 207) und/oder von der Empfangseinrichtung (205, 206, 207) in dieser fest eingestellten Position zu bestimmen.

11. Antennenvorrichtung nach Anspruch 10, wobei die zumindest eine erste Sendeeinrichtung (202, 204, 207) und/oder die zumindest eine erste Empfangseinrichtung (202, 204, 207) von einem Antennenhorn umgeben ist/sind.

12. Füllstandmessgerät (105) mit einer Antennenvorrichtung (201, 203) nach einem der Ansprüche 1 bis 11.

13. Verfahren zum Betreiben einer Antennenvorrichtung (201, 203), aufweisend:
Aussenden eines Sendesignals mit zumindest einer ersten Sendeeinrichtung (202, 204, 207);
Empfangen von zumindest zwei Empfangssignalen über zumindest eine erste Empfangseinrichtung (205, 206, 207);
Bestimmen eines Verlaufs einer Oberfläche eines Objekts aus den empfangenen zumindest zwei Empfangssignalen;
das Verfahren ist **gekennzeichnet durch**:
Erkennen eines Fehlers beim Bestimmen des Verlaufs der Oberfläche des Objekts; und
Ansteuern der Steuereinrichtung beim Erkennen des Fehlers derart, dass die Auswerteeinrichtung statt den Verlauf der Oberfläche des Objekts einen Abstand der Oberfläche des Objekts von der Sendeeinrichtung und/oder von der Empfangseinrichtung bestimmt.

## Claims

1. Antenna apparatus (201, 203), comprising:
a control unit (111);
an analysis unit (123);
at least one first transmitter unit (202, 204, 207);
at least one first receiver unit (205, 206, 207);
wherein the control unit (111) is configured to transmit a transmission signal by means of the at least one first transmitter unit (202, 204, 207);
wherein the analysis unit is configured to receive at least two reception signals by means of the at least one first receiver unit (205, 206, 207);
wherein the control unit (111) is configured to operate the at least one first transmitter unit (202, 204, 207) such that the analysis unit (123) determines a profile of a surface (120) of an object (104) from the at least two reception signals received;
**characterized in that**
the analysis unit (123) is configured to identify an error in determining the profile of the surface of the object; and
the analysis unit (123) is configured, upon identifying the error, to actuate the control unit (111) such that the analysis unit determines a distance of the surface of the object from the transmitter unit and/or from the receiver unit instead of determining the profile of the surface of the object.

2. Antenna apparatus (201, 203) according to claim 1,
wherein the analysis unit (123) is configured to determine, from the at least two reception signals, at least two echo curves for at least two specifiable spatial directions (101, 102, 103) in order to detect the profile of the surface (120) of the object (104);
wherein the analysis unit (123) is further configured to determine a quality measure for the at least two reception signals in order to identify the error when determining the profile of the surface (120) of the object (104); and
wherein, if the quality measure deviates from a specifiable threshold for the quality measure for the at least two reception signals, the analysis unit (123) is configured to instruct the transmitter unit to increase an energy of the transmission signal, and to determine a single echo curve for a single specifiable spatial direction.

3. Antenna apparatus (201, 203) according to claim 2, further comprising
at least one second receiver unit (205, 206, 207);
wherein the analysis unit (123) is configured to receive by means of each of the at least one first receiver unit (205, 206, 207) and the at least one second receiver unit (205, 206, 207) one of the at least two reception signals; and
wherein, if the quality measure deviates from the specifiable threshold for the quality measure, the analysis unit (123) is configured to transmit an additional transmission signal in order to increase the energy of the transmission signal, and in order to determine an echo curve for the single specifiable spatial direction.

4. Antenna apparatus (201, 203) according to claim 3, the antenna apparatus further comprising:
at least one second transmitter unit (202, 204, 207);
wherein the control unit (111) is configured to operate the at least one first transmitter unit (202, 204, 207) and the at least one second transmitter unit (202, 204, 207) in a time-division multiplexing mode, a frequency-division multiplexing mode and/or in a code-division multiplexing mode,
wherein the analysis unit (123) is configured, by analysing the reception signals that are induced by the at least two transmitter units (202, 204, 207) that are operated in the time-division multiplexing mode, in the frequency-division multiplexing mode and/or in the code-division multiplexing mode, to determine at least two echo curves for at least two specifiable spatial directions by applying the digital beamforming method; and
wherein, if the quality measure deviates from the specifiable threshold for the quality measure for the reception signals, the analysis unit (123) is further configured to switch from the time-division multiplexing mode, from the frequency-division multiplexing mode and/or from the code-division multiplexing mode into a parallel operation of the at least one first transmitter unit (202, 204, 207) and/or of the at least one second transmitter unit (202, 204, 207) and/or at least one of the first receiver unit (205, 206, 207) and the second receiver unit (205, 206, 207) in order to increase the energy of the transmission signal and in order to determine an echo curve for a single specifiable spatial direction.

5. Antenna apparatus (201, 203) according to any of claims 2 to 4, wherein the antenna apparatus (201, 203) further comprises
an adjustment unit (108, 109) for mechanically adjusting the at least one first receiver unit (202, 204, 207) into at least two specifiable spatial directions in order to receive the at least two reception signals from at least two spatial directions;
wherein, if the quality measure deviates from the specifiable threshold for the quality measure of the at least two reception signals, the analysis unit (123) is configured to fix the adjustment unit (108, 109) in the single specifiable spatial direction in order to increase the energy of the transmission signal, and in order to determine the single echo curve for the single specifiable spatial direction.

6. Antenna apparatus (201, 203) according to claim 5, wherein the antenna apparatus (201, 203) further comprises:
an additional transmitter unit (202, 204, 207);
wherein the control unit (111) is configured to transmit an additional transmission signal by means of the additional transmitter unit (202, 204, 207) while the adjustment unit (108, 109) is fixed in the single specifiable spatial direction.

7. Antenna apparatus (201, 203) according to any of claims 2 to 6, wherein the antenna apparatus further comprises:
an energy adjustment unit;
wherein the energy adjustment unit is configured to be instructed by the transmitter unit to increase the energy of the transmission signal.

8. Antenna apparatus (201, 203) according to any of claims 2 to 7, wherein adjacent transmitter units (202, 204, 207) and/or receiver units (205, 206, 207) are at a distance smaller than or equal to half of the wavelength of the transmission signal.

9. Antenna apparatus (201, 203) according to any of claims 1 to 8, wherein the antenna apparatus (201, 203), the control unit (111) and/or the analysis unit (123) is designed as a two-wire device.

10. Antenna apparatus (201, 203) according to any of claims 1 to 9, wherein the antenna apparatus (201, 203) further comprises
an adjustment unit (108, 109) for mechanically adjusting the at least one first transmitter unit (202, 204, 207) and/or the at least one first receiver unit (202, 204, 207) in order to determine the profile of the surface (120) of the object (104) by mechanically adjusting the at least one first transmitter unit (202, 204, 207) and/or the at least one first receiver unit (202, 204, 207);
wherein the analysis unit (123) is configured to fix the adjustment unit (108, 109) in a specifiable position upon identification of the error, and to determine the distance of the surface (120) of the object (104) from the transmitter unit (202, 204, 207) and/or from the receiver unit (205, 206, 207) in this fixed position.

11. Antenna apparatus according to claim 10, wherein the at least one first transmitter unit (202, 204, 207) and/or the at least one first receiver unit (202, 204, 207) is/are surrounded by an antenna horn.

12. Fill level measurement device (105) comprising an antenna apparatus (201, 203) according to any of claims 1 to 11.

13. Method for operating an antenna apparatus (201, 203), comprising:
transmitting a transmission signal by means of at least one first transmitter unit (202, 204, 207);
receiving at least two reception signals by means of at least one first receiver unit (205, 206, 207);
determining a profile of a surface of an object from the at least two reception signals received;
the method being **characterized by**:
identifying an error when determining the profile of the surface of the object; and
upon identifying the error, actuating the control unit such that the analysis unit determines a distance of the surface of the object from the transmitter unit and/or from the receiver unit instead of determining the profile of the surface of the object.

## Revendications

1. Dispositif d'antenne (201, 203), comprenant:
une unité de contrôle (111);
une unité d'analyse (123);
au moins une première unité d'émission (202, 204, 207);
au moins une première unité de réception (205, 206, 207);
dans lequel l'unité de contrôle (111) est configurée pour transmettre un signal de transmission au moyen de l'au moins une première unité d'émission (202, 204, 207);
dans laquelle l'unité d'analyse est configurée pour recevoir au moins deux signaux de réception au moyen de l'au moins une première unité de réception (205, 206, 207) ;
dans lequel l'unité de contrôle (111) est configurée pour faire fonctionner l'au moins une première unité d'émission (202, 204, 207) de telle sorte que l'unité d'analyse (123) détermine un profil d'une surface (120) d'un objet (104) à partir des au moins deux signaux de réception reçus;
**caractérisé en ce que**
l'unité d'analyse (123) est configurée pour identifier une erreur lors de la détermination du profil de la surface de l'objet; et
l'unité d'analyse (123) est configurée, lors de l'identification de l'erreur, pour actionner l'unité de commande (111) de telle sorte que l'unité d'analyse détermine une distance de la surface de l'objet par rapport à l'unité d'émission et/ou à l'unité de réception au lieu de déterminer le profil de la surface de l'objet.

2. Dispositif d'antenne (201, 203) selon la revendication 1,
dans lequel l'unité d'analyse (123) est configurée pour déterminer, à partir des au moins deux signaux de réception, au moins deux courbes d'écho pour au moins deux directions spatiales spécifiables (101, 102, 103) afin de détecter le profil de la surface (120) de l'objet (104);
dans lequel l'unité d'analyse (123) est en outre configurée pour déterminer une mesure de qualité pour les au moins deux signaux de réception afin d'identifier l'erreur lors de la détermination du profil de la surface (120) de l'objet (104); et
dans laquelle, si la mesure de qualité s'écarte d'un seuil spécifiable pour la mesure de qualité pour les au moins deux signaux de réception, l'unité d'analyse (123) est configurée pour ordonner à l'unité d'émission d'augmenter une énergie du signal de transmission, et de déterminer une courbe d'écho unique pour une direction spatiale unique spécifiable.

3. Dispositif d'antenne (201, 203) selon la revendication 2, comprenant en outre
au moins une deuxième unité de réception (205, 206, 207);
dans lequel l'unité d'analyse (123) est configurée pour recevoir au moyen de chacune des au moins une première unité de réception (205, 206, 207) et des au moins une deuxième unité de réception (205, 206, 207) un des au moins deux signaux de réception; et
dans laquelle, si la mesure de qualité s'écarte du seuil spécifiable pour la mesure de qualité, l'unité d'analyse (123) est configurée pour transmettre un signal de transmission supplémentaire afin d'augmenter l'énergie du signal de transmission, et afin de déterminer une courbe d'écho pour la direction spatiale spécifiable unique.

4. Dispositif d'antenne (201, 203) selon la revendication 3, le dispositif d'antenne comprenant en outre:
au moins une deuxième unité d'émission (202, 204, 207) ;
dans laquelle l'unité de commande (111) est configurée pour faire fonctionner l' au moins une première unité d'émission (202, 204, 207) et l'au moins une deuxième unité d'émission (202, 204, 207) dans un mode de multiplexage par répartition dans le temps, un mode de multiplexage par répartition en fréquence et/ou un mode de multiplexage par répartition en code,
dans lequel l'unité d'analyse (123) est configurée, en analysant les signaux de réception qui sont induits par les au moins deux unités d'émission (202, 204, 207) qui fonctionnent en mode de multiplexage par répartition dans le temps, en mode de multiplexage par répartition en fréquence et/ou en mode de multiplexage par répartition en code, pour déterminer au moins deux courbes d'écho pour au moins deux directions spatiales spécifiables en appliquant la méthode de formation de faisceau numérique; et
dans lequel, si la mesure de qualité s'écarte du seuil spécifiable pour la mesure de qualité des signaux de réception, l'unité d'analyse (123) est en outre configurée pour passer du mode de multiplexage temporel, du mode de multiplexage par répartition en fréquence et/ou du mode de multiplexage par répartition en code à un fonctionnement parallèle de la au moins une première unité d'émission (202), 204, 207) et/ou d'au moins une deuxième unité d'émission (202, 204, 207) et/ou d'au moins une de la première unité de réception (205, 206, 207) et de la deuxième unité de réception (205, 206, 207) afin d'augmenter l'énergie du signal de transmission et afin de déterminer une courbe d'écho pour une seule direction spatiale spécifiable.

5. Dispositif d'antenne (201, 203) selon l'une quelconque des revendications 2 à 4, dans lequel le dispositif d'antenne (201, 203) comprend en outre
une unité de réglage (108, 109) pour le réglage mécanique d'au moins une première unité de réception (202, 204, 207) dans au moins deux directions spatiales spécifiables afin de recevoir les au moins deux signaux de réception provenant d'au moins deux directions spatiales;
dans lequel, si la mesure de qualité s'écarte du seuil spécifiable pour la mesure de qualité des au moins deux signaux de réception, l'unité d'analyse (123) est configurée pour fixer l'unité de réglage (108, 109) dans la direction spatiale spécifiable unique afin d'augmenter l'énergie du signal de transmission, et afin de déterminer la courbe d'écho unique pour la direction spatiale spécifiable unique.

6. Dispositif d'antenne (201, 203) selon la revendication 5, dans lequel le dispositif d'antenne (201, 203) comprend en outre:
une unité d'émission supplémentaire (202, 204, 207);
dans lequel l'unité de contrôle (111) est configurée pour transmettre un signal de transmission supplémentaire au moyen de l'unité d'émission supplémentaire (202, 204, 207) tandis que l'unité de réglage (108, 109) est fixée dans la direction spatiale spécifiable unique.

7. Dispositif d'antenne (201, 203) selon l'une quelconque des revendications 2 à 6, dans lequel le dispositif d'antenne comprend en outre:
une unité de réglage d'énergie;
dans lequel l'unité de réglage d'énergie est configurée pour recevoir l'instruction de l'unité d'émission d'augmenter l'énergie du signal de transmission.

8. Dispositif d'antenne (201, 203) selon l'une quelconque des revendications 2 à 7, dans lequel des unités d'émission (202, 204, 207) et/ou des unités de réception (205, 206, 207) adjacentes sont à une distance inférieure ou égale à la moitié de la longueur d'onde du signal de transmission.

9. Dispositif d'antenne (201, 203) selon l'une quelconque des revendications 1 à 8, dans lequel le dispositif d'antenne (201, 203), l'unité de contrôle (111) et/ou l'unité d'analyse (123) est/sont conçu(s) comme un dispositif à deux lignes.

10. Dispositif d'antenne (201, 203) selon l'une quelconque des revendications 1 à 9, dans lequel le dispositif d'antenne (201, 203) comprend en outre
une unité de réglage (108, 109) pour régler mécaniquement l'au moins une première unité d'émission (202, 204, 207) et/ou l'au moins une première unité de réception (202, 204, 207) afin de déterminer le profil de la surface (120) de l'objet (104) en réglant mécaniquement l'au moins une première unité émettrice (202, 204, 207) et/ou l'au moins une première unité de réception (202, 204, 207) ;
dans lequel l'unité d'analyse (123) est configurée pour fixer l'unité de réglage (108, 109) dans une position spécifiable lors de l'identification de l'erreur, et pour déterminer la distance de la surface (120) de l'objet (104) par rapport à l'unité d'émission (202, 204, 207) et/ou par rapport à l'unité de réception (205, 206, 207) dans cette position fixe.

11. Dispositif d'antenne selon la revendication 10, dans lequel l'au moins une première unité d'émission (202, 204, 207) et/ou l'au moins une première unité de réception (202, 204, 207) est/sont entourée(s) par un cône d'antenne.

12. Dispositif de mesure du niveau de remplissage (105) comprenant un dispositif d'antenne (201, 203) selon l'une quelconque des revendications 1 à 11.

13. Procédé de fonctionnement d'un dispositif d'antenne (201, 203), comprenant :
transmettre un signal de transmission au moyen d'au moins une première unité d'émission (202, 204, 207) ;
réceptionner au moins deux signaux de réception au moyen d'au moins une première unité de réception (205, 206, 207);
déterminer le profil de la surface d'un objet à partir d'au moins deux signaux de réception reçus;
le procédé étant **caractérisé par**:
identifier une erreur lors de la détermination du profil de la surface de l'objet; et
après avoir identifié l'erreur, actionner l'unité de contrôle de telle sorte que l'unité d'analyse détermine une distance de la surface de l'objet par rapport à l'unité d'émission et/ou à l'unité de réception au lieu de déterminer le profil de la surface de l'objet.
